# EUROPÄISCHE PATENTSCHRIFT

(11) **EP 0 473 766 B1**
(45) Veröffentlichungstag und Bekanntmachung des Hinweises auf die Patenterteilung: **16.02.1994**
(21) Anmeldenummer: 91906786.8
(22) Anmeldetag: 16.03.1991
(51) Int. Cl.: B60G 17/015

(54) **EINRICHTUNG ZUM REGELN DES NIVEAUS EINES FAHRZEUGS**
DEVICE FOR CONTROLLING THE LEVEL OF A VEHICLE
DISPOSITIF DE REGULATION DU NIVEAU D'UN VEHICULE

(30) Priorität: 22.03.1990 DE 4009234
(43) Veröffentlichungstag der Anmeldung: 11.03.1992
(73) Patentinhaber: ITT Automotive Europe GmbH, 60488 Frankfurt (DE)
(72) Erfinder: ECKERT, Alfred, D-6500 Mainz-Laubenheim (DE)
(86) Internationale Anmeldenummer: EP9100506
(87) Internationale Veröffentlichungsnummer: WO9114588

(56) Entgegenhaltungen:
- EP-A- 36 437
- WO-A-89/09704
- DE-A- 2 306 012
- DE-A- 3 433 410
- GB-A- 2 220 176
- PATENT ABSTRACTS OF JAPAN, Band 12, Nr. 208 (M-709)(3055), 15. Juni 1988

## Beschreibung

Die Erfindung bezieht sich auf eine Einrichtung zum Regeln des Niveaus eines Fahrzeugs, bestehend im wesentlichen aus hydraulischen oder pneumatischen oder hydropneumatischen Schwingungsdämpfern, die zwischen den Fahrzeugrädern und dem Fahrzeugaufbau angeordnet sind, aus elektrisch steuerbaren Ventilen, die einen Druckmittelfluß zwischen einer Druckquelle, einem Speicher und den Schwingungsdämpfern freigeben bzw. sperren, aus Wegsensoren, die in Abhängigkeit von dem Abstand zwischen den Radachsen und dem Fahrzeugaufbau Signale abgeben, und aus einer elektronischen Auswerteschaltung, der die Sensorsignale zuführbar sind und die Signale zur Steuerung der Ventile abgibt, wie es Z.B. aus der WO 89/09704 bekannt ist.

Bekannte Niveauregeleinrichtungen haben folgende nachteilige Eigenschaften: Häufig zeigen sie ein sehr langsames Annähern an Sollwertvorgaben, oder sie besitzen grobe Ansprechschwellen. Dies hat entweder ein ständiges Regeln mit einer sehr starken Ventilbelastung zur Folge oder aber eine schlechte Regelgüte. Andere bekannte Regler sind relativ langsam, weil ihre Verstärkungsfaktoren klein sind. Zur Beseitigung der langsamen Regelgeschwindigkeit muß ein schneller Regler, d.h. ein nicht verzögernder Regler, verwendet werden. Dies bewirkt aber eine große Störempfindlichkeit im Fahrbetrieb, da diese Störungen sofort zu einer Reglertätigkeit führen, der Regler also diese Störungen ungedämpft oder sogar verstärkend an das Stellglied (Ventile) weitergibt. Umgekehrt bewirkt ein verzögernd wirkender Regler zwar eine erhebliche spektrale Abschwächung der Störung, jedoch ein zur Schwingung neigendes Verhalten bei Annäherung an den Sollwert unter Zugrundelegung einer vorgegebenen Streckencharakteristik. Diese Streckencharakteristik, also das aktive Hubverhalten der Hydraulik, wird näherungsweise beschrieben durch ein verzögernd integrierendes Verhalten, behaftet mit einer Systemtotzeit. Ein weiteres Problem liegt darin, daß normalerweise die Druckaufbaugeschwindigkeit wesentlich langsamer als die Druckabbaugeschwindigkeit ist. Durch die recht große Schwankungsbreite der Streckenparameter muß auf Stabilität des geschlossenen Kreises besonderen Wert gelegt werden.

Der Erfindung liegt daher die Aufgabe zugrunde, eine Einrichtung zum Regeln des Niveaus eines Fahrzeugs zu schaffen, die die geschilderten Nachteile bekannter Systeme vermeidet und die ein möglichst schnelles Erreichen von Sollwertvorgaben bei geringer Störempfindlichkeit im Fahrbetrieb erlaubt.

Es hat sich nun herausgestellt, daß diese Aufgabe mit einer Einrichtung der eingangs genannten Art zu lösen ist, deren Besonderheit darin besteht, daß die Auswerteschaltung als ein strukturvariabler Regler ausgebildet ist, der die Signale der Wegsensoren über einen Tiefpaß, vorzugsweise über einen Tiefpaß erster Ordnung, und über einen Proportionalübertrager einem Schwellwert-Schaltkreis zuleitet, dessen Ausgangssignal die Ventile steuert, und daß der Regler in Abhängigkeit von dem in dem Schwellwert-Schaltkreis bewerteten Regelsignal als PTₙ-Regler oder als P-Regler reagiert bzw. geschaltet ist.

Erfindungsgemäß wird also ein Regler für das Niveau eines Fahrzeugs zur Verfügung gestellt, der die Vorteile eines schnellen P-Reglers in Anpassung an die jeweilige Situation mit den Vorteilen eines langsameren, jedoch gegen Störungen unempfindlicheren PTₙ-Regler vereint. Zum Erreichen der gewünschten Regelcharakteristik wird der Regler gewissermaßen in zwei Regler zerlegt. Es wird ein strukturvariabler Regler geschaffen, der in Abhängigkeit von einer bewerteten oder gewichteten Regelgröße als PTₙ-Regler oder P-Regler reagiert. Auf diese Weise paßt sich die erf indungsgemäße Regeleinrichtung sehr genau und in der richtigen Weise der jeweiligen Regelsituation an.

In den meisten Fällen dürfte ein Tiefpaß erster Ordnung als PTₙ-Regler, also ein PT₁-Regler, genügen. Solche Schaltungen sind mit geringem Aufwand zu realisieren. In anderen Fällen könnte allerdings auch ein Tiefpaß höherer Ordnung Verwendung finden.

Nach einer vorteilhaften Ausführungsart der Erfindung erzeugt die Auswerteschaltung ständig sowohl der P-Regelung als auch der PTₙ-Regelung entsprechende Steuersignale, von denen dann in Abhängigkeit von dem bewerteten Regelsignal eines der beiden Steuersignale über den Schwellwert-Schaltkreis an die Ventile abgegeben wird. Durch diese Auslegung der Auswerteschaltung, nämlich durch das ständige Erzeugen von Steuersignalen über den P-Regelkreis und über den PTₙ-Regelkreis, ist ein besonders schnelles Umschalten von der einen zur anderen Reglerstruktur möglich.

Ein weiteres, vorteilhaftes Ausführungsbeispiel der Erfindung besteht darin, daß der Regler in der Ruhestellung oder Grundstellung als PTₙ-Regler geschaltet ist und daß als Schwellwert-Schaltkreis ein Dreipunkt-Schaltkreis dient, dessen Ausgangssignal zu einem Umschalter zurückgeführt ist und über diesen, sobald das Ausgangssignal des Dreipunkt-Schalters einen Schwellwert übersteigt, die Reglerstruktur von PTₙ-Regelung auf P-Regelung umschaltet.

Um eine größere Störunempfindlichkeit zu erreichen, wird vorteilhafterweise für den Regler eine Ruhezone geschaffen, indem nach einem weiteren Ausführungsbeispiel der Erfindung die Auswerteschaltung einen Niveau-Sollwert in Form eines Intervalles bestimmter Breite, das vorzugsweise symmetrisch um einen Mittelwert ist, der Regelung zugrunde legt. Die Intervallbreite steht damit als zusätzlicher Regelparameter zur Verfügung. Da der PTₙ-Regler nur in der Umgebung des Sollwertes arbeitet, hat er keinen Einfluß auf das Annähern des Sollwertes, sondern dient vor allem im Zusammenwirken mit der vorgegebenen Ruhezone zur Unterdrückung der Störungen im Fahrbetrieb. Diese Ruhezone ist nun direkt für die Genauigkeit der Regelung verantwortlich. Durch die dämpfende Charakteristik des PTₙ-Reglers kann auch die Genauigkeit des Regelkreises gegenüber den bisherigen Lösungen stark erhöht werden, da die Ruhezone kleiner als im unbeeinflußten Fall, d.h. bei Verzicht auf den Tiefpaß, werden kann.

Um nun einerseits eine möglichst große Genauigkeit zu erreichen, aber andererseits eine zeitlich kleine Ventilbelastung anzustreben, wird die Intervallbreite so verändert, daß eine vorgegebene Ventilschalthäufigkeit angestrebt wird. Dazu wird zunächst eine Soll-Schalthäufigkeit der Ventile vorgegeben und die tatsächliche Ventilschalthäufigkeit gezählt. Ein besonders einfaches Verfahren zum Zählen stellt die Bildung des mittleren Quadrats des bewerteten Regelsignals, d.h. des Ausgangssignals des Schwellwert-Schaltkreises, dar, zumal diese Größe ohnehin als Steuergröße ermittelt werden muß.

Vorteilhafterweise weist die Auswerteschaltung der erfindungsgemäßen Einrichtung einen Schaltkreis zum Integrieren der Differenz von vorgegebener und gezählter Ventilschalthäufigkeit auf und gibt in Abhängigkeit von dem Integrationsergebnis die Intervallbreite vor. Dieser zweite Regelkreis bietet den Vorteil, daß er noch zusätzlich stabilisierend auf den ersten Regelkreis wirkt und daß die Ventilschalthäufig- keit und damit auch die Material- und Geräuschbelastung auf ein vorgegebenes Maß beschränkt wird. Bei stehendem Fahrzeug ist die Ansprechschwelle der Regelung sehr fein. Kleinste Last- und Sollwertänderungen können schnell und sehr genau ausgeregelt werden. Im Fahrbetrieb führen Störungen durch Fahrbahnunebenheiten zu keiner Ventiltätigkeit oder nur zu geringen Ventilschalttätigkeiten. Auch hier werden Sollwertänderungen schnell, allerdings etwas langsamer als ohne Störungen, angenähert.

Noch andere vorteilhafte Weiterbildungen der Erfindung werden in den Unteransprüchen beschrieben. Über einen Schalter hat der Fahrer beispielsweise die Möglichkeit, drei verschiedene Niveau-Sollwerte vorzugeben. Es sind dies die Stellungen tief, normal (Automatik) und hoch. Der angewählte Sollwert wird sofort bei aktiviertem Motor angenähert. Beim Auswählen eines höheren Sollwertes wird zuerst die Hinterachse angehoben. Entsprechendes geschieht umgekehrt beim Absenken des Fahrzeugs, so daß immer das Niveau der Vorderachse etwas tiefer liegt als das der Hinterachse, und dadurch die Fahreigenschaften optimal sind.

Es kann auch geschwindigkeitsabhängig ein bestimmter Niveau-Sollwert angenähert werden. So wird in Stellung Automatik ab 120 km/h auf tiefes Niveau eingestellt, um dann wieder unter 80 km/h angehoben zu werden. Eine ähnliche Hysterese existiert auch zwischen hohem und normalem Niveau, nur in diesem Fall bei niedrigerer Geschwindigkeit. Bei Änderungen des Niveau-Sollwerts im Fahrbetrieb, z.B. beim geschwindigkeitsabhängigen Absenken des Fahrzeugs, wird die Ruhezone (Intervallbreite) für die Dauer des Einsteuerns auf Minimalgröße eingestellt, um die Einsteuergeschwindigkeit zu erhöhen, d.h. das neue Niveau möglichst schnell zu erreichen.

Ein besonders geringer Aufwand ist ausreichend, wenn das Niveau achsweise geregelt wird, da dann nur zwei 3/2-Wegeventile benötigt werden. Ein zusätzlicher Komfortgewinn ist im Verbund mit einer semi-aktiven Fahrwerksregelung möglich, obwohl auch die Erfindung schon eine Langzeitkompensation von Bremsnicken bzw. Kurvenneigung ermöglicht.

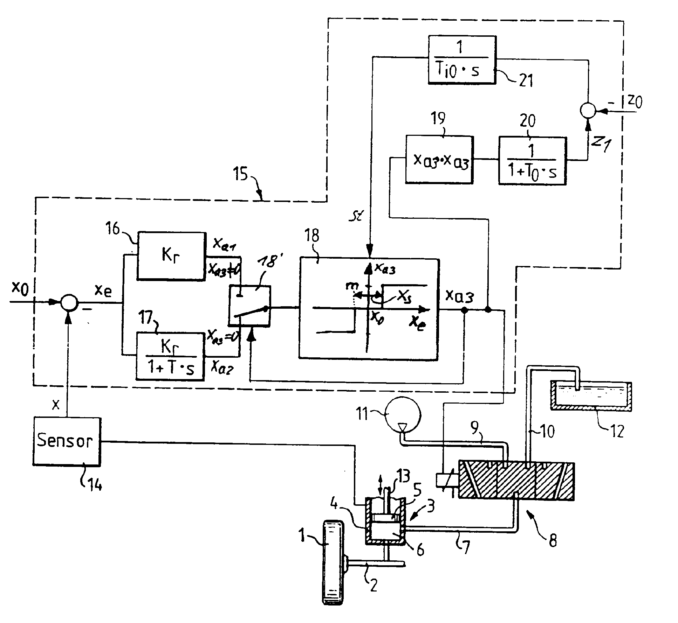

Weitere Merkmale, Vorteile und Anwendungsmöglichkeiten der Erfindung gehen aus der folgenden Darstellung eines Ausführungsbeispiels anhand der beigefügten Abbildung hervor, die im Blockschaltbild das Prinzip der Erfindung und den Signallaufweg wiedergibt.

Man erkennt, symbolisch dargestellt, ein Fahrzeugrad 1, an dessen Achse 2 ein Schwingungsdämper 3 angreift. Der Schwingungsdämpfer 3 besteht im wesentlichen aus einem Zylinder 4, in dem durch einen axial verschiebbaren Kolben 5 ein Druckraum 6 begrenzt wird. Der Druckraum 6 ist über eine hydraulische Leitung 7 mit einem 3/2-Wegeventil 8 verbunden. Je nach Ventilstellung ist der Druckraum 6 über die hydraulische Leitung 7 und über eine weitere hydraulische Leitung 9 oder 10 mit einer Druckquelle, nämlich mit einer Pumpe 11, bzw. mit einem drucklosen Speicher 12 verbunden.

Der Kolben 5 ist über eine Kolbenstange 13 mit einem nicht gezeigten Fahrzeugaufbau verbunden. Von einem Wegsensor 14 wird die Position der Kolbenstange 13 relativ zu dem Zylinder 4 erfaßt und ein dem Abstand zwischen der Radachse 2 und dem Aufbau entsprechendes Signal x, die Regelgröße, an eine elektronische Auswerteschaltung 15 abgegeben, die sich aus mehreren symbolisch dargestellten Schaltkreisen oder Schaltblöcken zusammensetzt.

Aus dem Ausgangsssignal x des Wegsensors 14 und dem beispielsweise von einem nicht gezeigten Schalter ausgegebenen Signal x₀ für den Niveau-Sollwert wird durch Differenzbildung das Eingangssignal xₑ der Regelstufe gebildet. Dieses Eingangssignal xₑ wird gleichzeitig von einem Proportionalübertrager oder P-Regler 16 und von einem Tiefpaß oder PTₙ-Regler 17 verarbeitet. Es handelt sich hier bei dem Schaltkreis 17 um einen Tiefpaß erster Ordnung oder einen sogen. PT₁-Regler. Der P-Regler 16 und der PT₁-Regler 17 haben hier einen Verstärkungsfaktor Kᵣ. Der PT₁-Regler 17 ist zusätzlich noch mit einer Zeitkonstanten T behaftet.

Über eine Umschalter 18' werden die Ausgangssignale Xₐ₁ des P-Reglers 16 bzw. das Ausgangssignal xₐ₂ des PT₁-Reglers 17 zu einem Schwellwert-Schaltkreis 18, hier einem Dreipunkt-Schaltkreis, weitergeleitet. Das Ausgangssignal xₐ₃ dieses Schwellwert-Schaltkreises, das das Hydraulikventil 8 steuert, wird außerdem zu dem Umschalter 18' am Eingang des Schwellwert-Schaltkreises 18 zurückgeführt und bestimmt die Schaltposition dieses Umschalters. Je nach dem, ob das bewertete Regelsignal xₐ₃ null oder ungleich null ist, wird durch die Rückführung dieses Signals xₐ₃ zu dem Schalter 18' das Ausgangssignal xₐ₂ des Tiefpasses bzw. des PT₁-Reglers 17 oder das Ausgangssignal xₐ₁ des Proportionalübertragers bzw. P-Reglers 16 über den Schwellwert-Schaltkreis 18 zu dem Ventil 8 durchgeschaltet. In der Ruhestellung, solange das Regelsignal "0" oder sehr klein ist, befindet sich der Umschalter 18' in der dargestellten Ruhestellung, überschreitet das bewertete Regelsignal xₐ₃ einen Schwellwert ±m, erfolgt die Umschaltung des Schalters 18' in die zweite Position, in der das Ausgangssignal xₐ₁ des Proportionalübertrages 16 zu dem Ventil 8 gelangt.

In dem Piktogram, das im Inneren des Schaltblockes 18, das den Schwellwert-Schaltkreis wiedergegeben ist, ist der Volumenstrom m am Ausgang des Ventils 8 als Funktion des Reglereingangssignals xₑ dargestellt. Dabei ist um das Niveau-Sollwertsignal x₀ ein Intervall der Breite xₛ geschaffen, innerhalb dessen das Ventil 8 in seiner gezeigten Ruhestellung bleibt, der Volumenstrom m also 0 ist. Wird der Betrag des Eingangssignals größer als die Intervallbreite xₛ, so wird das Ventil 8 umgeschaltet, und zwar derart, daß durch den Volumenstrom m der Druckraum 6 so aufgefüllt oder entleert wird, daß sich das Sollniveau einstellt. m kann folglich positiven oder negativen Wert annehmen.

Die Intervallbreite xₛ unterliegt einer weiteren Regelung, wie dies durch die Schaltblöcke 19 - 21 dargestellt ist. Zur Ermittlung der Ventilschalthäufigkeit z₁ wird die bewertete Regelgröße xₐ₃, die mit dem Ventilbetätigungssignal identisch ist, in einem Operator 19 quadriert und in einem Operator 20 mit der Zeitkonstanten T₀ gemittelt. Der Operator 20 ist folglich ein Tiefpaß erster Ordnung. Vom Ergebnis wird die Soll-Ventilschalthäufigkeit z₀, die der Auswerteschaltung 15 von außen mitgeteilt wird, abgezogen und die Differenz in einem Integrator 21 mit der Integrationszeitkonstanten Tᵢ₀ integriert. Abhängig vom Ergebnis der Integration wird, vorteilhafterweise mit Hilfe einer festgelegten Tabelle, die Intervallbreite xₛ durch ein entsprechendes Steuersignal St eingestellt.

## Patentansprüche

1. Einrichtung zum Regeln des Niveaus eines Fahrzeugs, bestehend im wesentlichen aus hydraulischen oder pneumatischen oder hydropneumatischen Schwingungsdämpfern, die zwischen den Fahrzeugrädern und dem Fahrzeugaufbau angeordnet sind, aus elektrisch steuerbaren Ventilen, die einen Druckmittelfluß zwischen einer Druckquelle, einem Speicher und den Schwingungsdämpfern freigeben bzw. sperren, aus Wegsensoren, die in Abhängigkeit von dem Abstand zwischen den Radachsen und dem Fahrzeugaufbau Signale abgeben, und aus einer elektronischen Auswerteschaltung, der die Sensorsignale zuführbar sind und die Signale zur Steuerung der Ventile abgibt, dadurch **gekennzeichnet,** daß die Auswerteschaltung (15) als ein strukturvariabler Regler ausgebildet ist, der die Signale (x) der Wegsensoren (14) über einen Tiefpaß (17) und über einen Proportionalübertrager (16) einem Schwellwert-Schaltkreis (18) zuleitet, dessen Ausgangssignal (xₐ₃) die Ventile (8) steuert, und daß der Regler in Abhängigkeit von den in dem Schwellwert-Schaltkreis (18) bewerteten Regelsignal als PTₙ-Regler oder als P-Regler reagiert.

2. Einrichtung nach Anspruch 1, dadurch **gekenn****zeichnet,** daß die Auswerteschaltung (15) ständig sowohl der PTₙ-Regelung als auch der P-Regelung entsprechende Steuersignale (xₐ₂ bzw. xₐ₁) erzeugt und daß in Abhängigkeit von dem bewerteten Regelsignal (xₐ₃), d.h. dem Ausgangssignal des Schwellwert-Schaltkreises (18), eines der beiden Steuersignale (xₐ₂ oder xₐ₁) über den Schwellwert-Schaltkreis (18) an die Ventile (8) abgegeben wird.

3. Einrichtung nach Anspruch 1 oder 2, dadurch **ge****kennzeichnet,** daß die Auswerteschaltung (15) in der Ruhestellung oder Grundstellung als PTₙ-Regler geschaltet ist und daß als Schwellwert-Schaltkreis (18) ein Dreipunkt-Schaltkreis dient, dessen Ausgangssignal zu einem Umschalter (18') zurückgeführt ist und über diesen, sobald das Ausgangssignal (xₐ₃) des Dreipunkt-Schaltkreises einen Schwellwert übersteigt, die Regelstruktur von der PTₙ-Regelung auf P-Regelung umschaltet.

4. Einrichtung nach einem oder mehreren der Ansprüche 1 - 3, dadurch **gekennzeichnet,** daß die Auswerteschaltung (15) einen Niveau-Sollwert der Regelung zugrunde legt, wobei als Niveau-Sollwert ein Intervall bestimmter Breite (x_{S}), vorzugsweise symmetrisch zu einem Mittelwert, vorgegeben ist.

5. Einrichtung nach einem oder mehreren der Ansprüche 1 - 4, dadurch **gekennzeichnet,** daß eine Soll-Schalthäufigkeit(z₀) der Ventile (8) vorgegeben ist.

6. Einrichtung nach einem oder mehreren der Ansprüche 1 - 5, dadurch **gekennzeichnet,** daß die Auswerteschaltung (15) durch Bilden des mittleren Quadrats des bewerteten Regelsignals (xₐ₃), nämlich des Ventil-Ansteuersignals, ein Maß für die Schalthäufigkeit (z₁) der Ventile (8) ermittelt.

7. Einrichtung nach einem oder mehreren der Ansprüche 1 bis 6, dadurch **gekennzeichnet,** daß die Auswerteschaltung (15) einen Schaltkreis (Integrator 21) zum Integrieren der Differenz aus vorgegebener und ermittelter Ventilschalthäufigkeit (z₀ bzw. z₁) aufweist.

8. Einrichtung nach Anspruch 7, dadurch **gekenn****zeichnet,** daß die Auswerteschaltung (15) die Intervallbreite (xₛ) in Abhängigkeit von dem Integrationsergebnis festlegt.

9. Einrichtung nach einem oder mehreren der Ansprüche 1 - 8, 8, dadurch **gekennzeichnet,** daß die Auswerteschaltung (15) einen Schalter zum manuellen Vorwählen eines von mehreren Niveau-Sollwerten aufweist, wobei insbesondere drei Stellungen (hoch, normal bzw. Automatik, tief) vorgesehen sind.

10. Einrichtung nach einem oder mehreren der Ansprüche 1 - 9, dadurch **gekennzeichnet,** daß die Auswerteschaltung (15) fahrzeuggeschwindigkeitsabhängig einen von mehreren, insbesondere von drei Niveau-Sollwerten, einstellt.

11. Einrichtung nach Anspruch 10, dadurch **gekennzeichnet,** daß die Auswerteschaltung (15) beim Überschreiten einer ersten vorgegebenen Geschwindigkeit, beispielsweise 120 km/h, den Niveau-Sollwert jeweils um eine Stufe absenkt und beim Unterschreiten einer zweiten vorgegebenen Geschwindigkeit, die kleiner ist als die erste Geschwindigkeit, beispielsweise 80 km/h, den Niveau-Sollwert jeweils um eine Stufe erhöht.

12. Einrichtung nach einem oder mehreren der Ansprüchen 1 bis 11, dadurch **gekennzeichnet,** daß die Auswerteschaltung (15), auch wenn manuell ein oberer Niveau-Sollwert vorgegeben ist, diesen geschwindigkeitsabhängig absenkt.

13. Einrichtung nach einem oder mehreren der Ansprüche 1 - 12, dadurch **gekennzeichnet,** daß die Auswerteschaltung (15) beim manuellen oder geschwindigkeitsabhängigen Ändern des Niveau-Sollwerts die Intervallbreite (xₛ) für eine vorgegebene Zeit auf einen Minimalwert einstellt.

14. Einrichtung nach einem oder mehreren der Ansprüche 1 - 13, dadurch **gekennzeichnet,** daß die Auswerteschaltung (15) den Niveau-Sollwert derart einstellt, daß die Hinterachse stets ein etwas höheres Niveau als die Vorderachse einnimmt, mindestens jedoch das gleiche Niveau wie die Vorderachse.

15. Einrichtung nach einem oder mehreren der Ansprüche 1 - 14, 14, dadurch **gekennzeichnet,** daß diese in eine semi-aktive Fahrwerksregelung integriert ist.

## Claims

1. A device for controlling the level of a vehicle which is substantially composed of hydraulic or pneumatic or hydropneumatic vibration dampers installed between the vehicle wheels and the vehicle body, of electrically controllable valves which open and/or close a pressure fluid flow between a pressure source, an accumulator and the vibration dampers, of travel sensors which issue signals in response to the distance between the wheel axles and the vehicle body, and of an electronic evaluating circuit which can be supplied with the sensor signals and which issues signals to control the valves, **characterised** in that the evaluating circuit (15) is designed as a controller variable in structure which supplies the signals (x) of the travel sensors (14) via a low-pass filter (17) and via a proportional transformer (16) to a threshold-value circuit (18), the output signal (xₐ₃) thereof controlling the valves (8), and in that the controller reacts as a PTₙ-controller or as a P-controller in response to the control signal evaluated in the threshold-value circuit (18).

2. A device as claimed in claim 1,
**characterised** in that the evaluating circuit (15) constantly generates control signals (Xₐ₂ and, respectively, xₐ₁) which correspond to both the PTₙ-control and the P-control, and in that, in response to the evaluated control signal (xₐ₃), namely the output signal of the threshold-value circuit (18), one of the two control signals (xₐ₂ or xₐ₁) is issued via the threshold-value circuit (18) to the valves (8).

3. A device as claimed in claim 1 or 2,
**characterised** in that the evaluating circuit (15) operates as a PTₙ-controller in the rest position or basic position, and in that a three-point circuit serves as a threshold-value circuit (18), the output signal whereof is fed back to a change-over switch (18') and via said switches the control structure over from PTₙ-control to P-control as soon as the output signal (xₐ₃) of the three-point circuit exceeds a threshold value.

4. A device as claimed in anyone or more of the claims 1 to 3,
**characterised** in that the evaluating circuit (15) makes a desired level value the basis of the control, with an interval of predetermined width (xₛ) being predetermined as a desired level value, preferably symmetrically relative to a mean value.

5. A device as claimed in anyone or more of the claims 1 to 4,
**characterised** in that a nominal switching frequency (z₀) of the valves (8) is predefined.

6. A device as claimed in anyone or more of the claims 1 to 5,
**characterised** in that the evaluating circuit (15) determines a standard for the switching frequency (z₁) of the valves (8) by forming the mean square of the evaluated control signal (xₐ₃), namely the valve driving signal.

7. A device as claimed in anyone or more of the claims 1 to 6,
**characterised** in that the evaluating circuit (15) comprises a circuit (integrator 21) for integrating the difference between predetermined and ascertained valve switching frequency (z₀ and, respectively, z₁).

8. A device as claimed in claim 7,
**characterised** in that the evaluating circuit (15) determines the interval width (xₛ) in dependence on the integration result.

9. A device as claimed in anyone or more of the claims 1 to 8,
**characterised** in that the evaluating circuit (15) comprises a switch for the manual pre-selection of one of a number of desired level values, with three positions (high, normal or automatic, respectively, deep) being provided in particular.

10. A device as claimed in anyone or more of the claims 1 to 9,
**characterised** in that the evaluating circuit (15) adjusts one of a number of desired level thresholds, especially of three, in response to vehicle speed.

11. A device as claimed in claim 10,
**characterised** in that once a first predefined speed, e.g. 120 km/h, is exceeded the evaluating circuit (15) lowers the desired level value by one step each, and when a second predefined speed is kept under, which is less than the first speed, e.g. 80 km/h, increases the desired level value by one step each.

12. A device as claimed in anyone or more of the claims 1 to 11,
**characterised** in that even if a maximum desired level value is predetermined manually, the evaluating circuit (15) will lower the said in response to speed.

13. A device as claimed in anyone or more of the claims 1 to 12,
**characterised** in that on manual or speed-responsive variation of the desired level value the evaluating circuit (15) adjusts the interval width (xₛ) to a minimum value for a predetermined period of time.

14. A device as claimed in anyone or more of the claims 1 to 13,
**characterised** in that the evaluating circuit (15) adjusts the desired level value such that the rear axle always adopts a somewhat higher level than the front axle, however, at least has the same level as the front axle.

15. A device as claimed in anyone or more of the claims 1 to 14,
**characterised** in that the said device is integrated in a semi-active suspension control.

## Revendications

1. Dispositif de régulation de la hauteur d'un véhicule automobile, constitué pour l'essentiel d'amortisseurs hydrauliques, pneumatiques ou hydropneumatiques de d'oscillations, disposés entre les roues du véhicule et la caisse du véhicule, de valves à commande électrique, libérant ou bloquant le passage d'un flux d'agent de pression entre une source de pression, un accumulateur et les amortisseurs d'oscillations, de capteurs de course, délivrant des signaux en fonction de la distance séparant les essieux de roues de la carrosserie du véhicule, et d'un circuit électronique d'exploitation auquel les signaux du capteur peuvent être envoyés et qui délivre des signaux de commande des valves, caractérisé en ce que le circuit d'exploitation (15) est réalisé sous la forme d'un régulateur à structure variable qui envoie les signaux (x) des capteurs de course (14), par l'intermédiaire d'un filtre passe-bas (17) et d'un transmetteur proportionnel (16), à un circuit à valeur de seuil (18) dont le signal de sortie (xa3) commande les valves (8) et en ce qu'en fonction du signal de régulation évalué dans le circuit à valeur de seuil (18), le régulateur réagit en tant que régulateur proportionnel ou en tant que régulateur (PTn).

2. Dispositif suivant la revendication 1, caractérisé en ce que le circuit d'exploitation (15) produit en permanence des signaux de commande (respectivement xₐ₂, xₐ₁) correspondant aussi bien à la régulation proportionnelle qu'à la régulation PTn et en ce qu'en fonction du signal de régulation évalué (xa3), c'est-à-dire du signal de sortie du circuit à valeur de seuil (18), l'un des deux signaux de commande (xₐ₂ ou xₐ₁) est délivré aux valves (8) par l'intermédiaire du circuit à valeur de seuil (18.).

3. Dispositif suivant l'une des revendications 1 et 2, caractérisé en ce que, dans la position de repos ou position de base, le circuit d'exploitation (15) est commuté en régulateur (PTn) et en ce que le circuit à valeur de seuil (18) est constitué par un circuit à trois paliers dont le signal de sortie est renvoyé à un commutateur (18') et conmunte, par l'intermédiaire de ce dernier, la structure de régulation de la régulation (PTn) à la régulation proportionnelle dès que le signal de sortie (xₐ₃) du circuit à trois paliers franchit vers le haut une valeur de seuil.

4. Dispositif suivant l'une des revendications 1 à 3, caractérisé en ce que le circuit d'exploitation (15) fixe comme base à la régulation une valeur de consigne de hauteur, un intervalle de largeur déterminée (xs), de préférence symétrique par rapport à une valeur moyenne, étant préfixé comme valeur de consigne de hauteur.

5. Dispositif suivant l'une des revendications 1 à 4, caractérisé en ce qu'une fréquence de manoeuvre de consigne (zo) des valves (8) est préfixée.

6. Dispositif suivant l'une des revendications 1 à 5, caractérisé en ce que, par formation de la valeur quadratique moyenne du signal de régulation (xₐ₃) évalué, c'est-à-dire du signal de commande de valve, le circuit d'exploitation( 15) détermine une mesure pour la fréquence de manoeuvre (z₁) des valves (8).

7. Dispositif suivant l'une des revendications 1 à 6, caractérisé en ce que le circuit d'exploitation (15) comprend un circuit (intégrateur 21) servant à l'intégration de la différence entre la fréquence préfixée (z₀) et la fréquence déterminée (z₁) de manoeuvre des valves.

8. Dispositif suivant la revendication 7, caractérisé en ce que le circuit d'exploitation (15) détermine la largeur (xₛ) de l'intervalle en fonction du résultat de l'intégration.

9. Dispositif suivant l'une des revendications 1 à 8, caractérisé en ce que le circuit d'exploitation (15) comporte un commutateur de presélection manuelle d'une valeur parmi plusieurs valeurs de consigne de hauteur, trois positions (haute, normale ou automatique, basse) étant notamment prévues.

10. Dispositif suivant l'une des revendications 1 à 9, caractérisé en ce qu'en fonction de la vitesse du véhicule, le circuit d'exploitation (15) met en service une valeur parmi plusieurs valeurs de consigne de hauteur, notamment au nombre de trois.

11. Dispositif suivant la revendication 10, caractérisé en ce que, lorsqu'une première vitesse préfixée, par exemple 120 km/h, est franchie vers le haut, le circuit d'exploitation (15) fait chaque fois descendre d'un palier la valeur de consigne de hauteur et en ce que, lorsqu'une seconde vitesse préfixée, qui est inférieure à la première vitesse, par exemple 80 km/h, est franchie vers le bas, il élève chaque fois d'un palier la valeur de consigne de hauteur.

12. Dispositif suivant l'une des revendications 1 à 11, caractérisé en ce que, même lorsqu'une valeur supérieure de consigne de hauteur est préfixée manuellement, le circuit d'exploitation (15) abaisse cette valeur de consigne en fonction de la vitesse.

13. Dispositif suivant l'une des revendications 1 à 12, caractérisé en ce que, lors d'une modification de la valeur de consigne de hauteur s'effectuant manuellement ou en fonction de la vitesse, le circuit d'exploitation (15) établit la largeur (xs) de l'intervalle à une valeur minimale pendant une période préfixée.

14. Dispositif suivant l'une des revendications 1 à 13, caractérisé en ce que le circuit d'exploitation (15) établit la valeur de consigne de hauteur de façon telle que l'essieu arrière adopte constamment une hauteur légèrement plus élevée que l'essieu avant, en étant toutefois au moins à la même hauteur que cet essieu avant.

15. Dispositif suivant l'une des revendications 1 à 14, caractérisé en ce que ce dispositif est intégré dans une régulation semi-active du châssis.
